# EUROPÄISCHE PATENTANMELDUNG

(11) **EP 3 502 806 A1**
(43) Veröffentlichungstag der Anmeldung: **26.06.2019**
(21) Anmeldenummer: 17210288.1
(22) Anmeldetag: 22.12.2017
(51) Int. Cl.: G05B 9/02, G05B 19/042

(54) **VERFAHREN ZUM SCHUTZ DER PRODUKTIONSDATEN ZUR HERSTELLUNG EINES PRODUKTS**

(71) Anmelder: Siemens Aktiengesellschaft, 80333 München (DE)
(72) Erfinder: Belhachemi, Omar, 80639 München (DE); Falk, Rainer, 85586 Poing (DE); Feist, Christian Peter, 80689 München (DE); Fischer, Kai, 85598 Baldham (DE); Friedrich, Daniela, 81541 München (DE); Fries, Steffen, 85598 Baldham (DE); Heintel, Markus, 81377 München (DE)

(57) **Zusammenfassung**

Ein Verfahren zur Herstellung eines Produkts mit einer Werkzeugmaschine (1), z.B. Fräsmaschine, Spritzgussmaschine, Schweißroboter, Laserschneidegerät oder 3D-Drucker, wobei das Produkt unter Berücksichtigung einer Steuerinformation (7) in einer Herstelleinheit (2) hergestellt wird (S1,S1'), wobei Produktionsdaten (8), die das Herstellen des Produkts beschreiben, während des Herstellens des Produkts in einer Erzeugungseinheit (3) erzeugt werden (S2,S2'), wobei eine Schutzinformation (9) in einer Bereitstelleinheit (4) bereitgestellt wird (S3, S3'), die angibt, welche der Produktionsdaten (8) zu schützen sind, und die ein Schutzverfahren für diese zu schützenden Produktionsdaten (8) definiert, z.B. eine kryptographische Verschlüsselung; und wobei die betreffenden Produktionsdaten (8) entsprechend in einer Schutzeinheit (5) geschützt bzw. verschlüsselt werden (S4,S4'). Der Schutz der Produktionsdaten (8) bzw. der Steuerinformation kann auch durch Digital Rights Management (DRM) kontrolliert werden und die Integrität mittels digitaler Signatur oder Prüfsumme geschhutzt werden. Durch den Schutz bzw. die Verschlüsselung der Produktionsdaten (8) kann verhindert werden, dass die Produktionsdaten (8) durch unbefugte Einrichtungen oder Benutzer abgelesen werden und daraus die Steuerinformation abgeleitet wird.

## Beschreibung

Die vorliegende Erfindung betrifft ein Verfahren zur Herstellung eines Produkts mit einer Werkzeugmaschine sowie eine Werkzeugmaschine zur Herstellung eines Produkts.

Eine Werkzeugmaschine, wie zum Beispiel ein Laserschneidegerät oder ein 3D-Drucker, kann zur Herstellung eines Produkts verwendet werden. Die Herstellung des Produkts kann dabei durch eine Steuerinformation gesteuert werden. Die Steuerinformation kann beispielsweise Prozessschritte und/oder Prozessparameter der Werkzeugmaschine festlegen. Es ist bekannt, die Steuerinformation zum Beispiel anhand von Verschlüsselungsverfahren derart zu schützen, dass sie nicht kopiert werden kann. Es kann jedoch die Gefahr bestehen, dass aus Produktionsdaten, die während der Herstellung des Produkts erzeugt werden, die Steuerinformation abgeleitet werden können.

Aus dem Stand der Technik sind das Dokument US 8,531,247 B2, das Dokument US 8,892,616 B2, das Dokument US 8,300,811 B2, das Dokument US 9,147,088 B2, das Dokument US 9584311 B2, das Dokument EP 2976707 B1, das Dokument EP 2 605 445 B1, das Dokument EP 2 870 565 A1, das Dokument EP 2 891 102 A1, das Dokument WO 2017137256 A1, das Dokument EP 2870565 B1, das Dokument EP 3028140 B1, das Dokument EP 17175275 und das Dokument US 8 843 761 B2 bekannt.

Vor diesem Hintergrund besteht eine Aufgabe der vorliegenden Erfindung darin, eine verbesserte Herstellung eines Produkts zu schaffen.

Gemäß einem ersten Aspekt wird ein Verfahren zur Herstellung eines Produkts mit einer Werkzeugmaschine vorgeschlagen. Das Verfahren umfasst:
Herstellen des Produkts mit der Werkzeugmaschine unter Berücksichtigung einer Steuerinformation, die das Herstellen des Produkts steuert;
Erzeugen von Produktionsdaten durch die Werkzeugmaschine während des Herstellens des Produkts, wobei die Produktionsdaten das Herstellen des Produkts beschreiben;
Bereitstellen einer Schutzinformation an die Werkzeugmaschine, die angibt, welche der Produktionsdaten zu schützen sind, und die ein Schutzverfahren für diese zu schützenden Produktionsdaten definiert; und
Schützen derjenigen Produktionsdaten, die gemäß der Schutzinformation zu schützen sind, mit dem durch die Schutzinformation definierten Schutzverfahren.

Die Werkzeugmaschine ist insbesondere eine Maschine zur Herstellung/Fertigung von Produkten anhand eines Werkzeugs, dessen Bewegung durch die Maschine vorgegeben wird. Die Werkzeugmaschine kann zumindest teilweise als eine Fräse, eine Presse, eine Säge, eine Spritzgussmaschine, ein Schweißroboter, ein Laserschneidegerät oder ein 3D-Drucker ausgebildet sein. Das Herstellen des Produkts kann zum Beispiel ein Schweißen, Schneiden, eine additive Fertigung und/oder Fräsen umfassen.

Das Produkt ist insbesondere ein Werkstück, das durch die Werkzeugmaschine bearbeitet, hergestellt und/oder verändert wird. Bei dem Produkt kann es sich zum Beispiel um ein Metallstück handeln, dass mit einer Fräse in eine vorbestimmte Form gefräst wird. Das hergestellte Produkt ist nicht notwendigerweise ein finales Produkt, es kann auch ein Zwischenprodukt sein.

Die Steuerinformation definiert insbesondere, wie die Werkzeugmaschine zu betreiben ist, um das Produkt herzustellen. Das Herstellen des Produkts erfolgt insbesondere gemäß der Steuerinformation. Die Steuerinformation kann beispielsweise Prozessparameter der Werkzeugmaschine definieren. Diese Prozessparameter können eine Stärke eines Lasers, eine Zusammensetzung von verwendeten Schutzgasen oder Schmiermitteln, eine Fräsgeschwindigkeit, eine Fräsdrehzahl oder dergleichen umfassen. Ferner kann die Steuerinformation Herstellungsdaten enthalten, die Herstellungsschritte der Werkzeugmaschine festlegen und z.B. eine 3D-Druckdatei, ein Fräsprogramm und/oder ein CNC-Programm (Computerized Numerical Control) sind. Die Steuerinformation kann auch als Produktionssteuerinformation und/oder Projektierungsinformation bezeichnet werden.

Die Steuerinformation kann geschützt werden, zum Beispiel indem sie kryptographisch verschlüsselt wird. Der Schutz der Steuerinformation kann auch durch digitale Rechteverwaltung (engl. Digital Rights Management oder kurz DRM) kontrolliert werden. Durch den Schutz der Steuerinformation kann insbesondere verhindert werden, dass diese unautorisiert kopiert wird und anderweitig zum Betreiben von anderen Werkzeugmaschinen eingesetzt wird. Weiterhin kann die Steuerinformation durch eine kryptographische Prüfsumme, z.B. eine digitale Signatur oder Nachrichtenauthentisierungscode, integritätsgeschützt sein.

Die Produktionsdaten können während der Herstellung des Produkts durch die Werkzeugmaschine erzeugt werden. Es handelt sich dabei beispielsweise um Logdaten und/oder Überwachungsdaten, die die Herstellung des Produkts charakterisieren. Die Produktionsdaten können durch Sensoren während der Herstellung des Produkts erfasst werden und zum Beispiel eine Temperatur, Schwingungen, akustische Emissionen oder auftretende Kräfte während der Herstellung beschreiben. In einer Variante können die Produktionsdaten auch Testdaten oder Prüfdaten des gefertigten Produkts umfassen, die beim Produktionsprozess ermittelt wurden. Sie können durch Sensoren erfasst werden, die in die Werkzeugmaschine integriert oder mit der Werkzeugmaschine verbunden sind. Die Produktionsdaten können auch als Herstellungsprozessdaten bezeichnet werden. Die Produktionsdaten können zum Beispiel durch einen Nutzer der Werkzeugmaschine und/oder durch eine externe Überwachungseinrichtung analysiert werden, um zu überprüfen, ob die Herstellung des Produkts ordnungsgemäß durch die Werkzeugmaschine durchgeführt wurde.

Die Produktionsdaten können gemäß der Schutzinformation geschützt werden. Die Schutzinformation gibt insbesondere an, ob und wie die Produktionsdaten zu schützen sind. Wie die Produktionsdaten zu schützen sind, ist insbesondere in dem Schutzverfahren definiert, welches Teil der Schutzinformation sein kann. Die Schutzinformation kann zum Beispiel angeben, dass die Produktionsdaten nicht zu schützen sind, kryptographisch zu schützen sind und/oder geheim zu halten sind.

Die Schutzinformation kann auch ein Schutzniveau für die Produktionsdaten vorgeben, wobei das Schutzniveau zum Beispiel einen geringen Schutz, einen mittleren Schutz oder einen hohen Schutz definieren kann. Die Schutzinformation kann auch in Abhängigkeit einer Wichtigkeit der Produktionsdaten einen geeigneten Schutz für die Produktionsdaten bestimmen.

Die Produktionsdaten werden insbesondere unter Berücksichtigung der Schutzinformation mit dem Schutzverfahren geschützt. Dabei können z.B. die Produktionsdaten, für die die Schutzinformation einen kryptographischen Schutz vorschreibt, verschlüsselt werden. Die Produktionsdaten, die gemäß der Schutzinformation nicht zu schützen sind, werden nicht geschützt, insbesondere nicht verschlüsselt.

Die Produktionsdaten, für die ein Schutz erforderlich ist, können insbesondere in dem Herstellungsverfahren durch die Werkzeugmaschine geschützt werden. Der angemessene Schutz kann dabei durch das Schutzverfahren der Schutzinformation vorgeschrieben werden. Dadurch, dass die Produktionsdaten geschützt werden können, kann deren Inhalt geschützt werden. Falls die Produktionsdaten verschlüsselt werden, kann nur eine Einrichtung mit einem geeigneten Entschlüsselungsschlüssel die Produktionsdaten entschlüsseln und den Inhalt der Produktionsdaten lesen.

In Ausführungsformen werden die Produktionsdaten nach der Herstellung des Produkts an externe Einrichtungen bereitgestellt. Ein Zugriff der externen Einrichtungen auf die Produktionsdaten kann durch den Schutz der Produktionsdaten eingeschränkt werden.

Es wird insbesondere verhindert, dass unbefugte externe Einrichtungen und/oder Benutzer den Inhalt der Produktionsdaten erlangen oder diese unautorisiert verändern, und daraus zum Beispiel die Steuerinformation ableiten. Die Produktionsdaten und somit auch die Steuerinformation können insbesondere während der Herstellung des Produkts geschützt werden.

Gemäß einer Ausführungsform definiert die Schutzinformation für unterschiedliche Produktionsdatenkategorien unterschiedliche Schutzverfahren, wobei jede Produktionsdatenkategorie mehrere Produktionsdaten umfasst, welche bei dem Herstellen eines einzigen Produkts erzeugt werden und/oder welche bei dem Herstellen von unterschiedlichen Produkten mit der Werkzeugmaschine erzeugt werden.

Mehrere Produktionsdaten können in unterschiedliche Produktionskategorien eingeteilt werden. Bei den mehreren Produktionsdaten kann es sich um welche handeln, die beim Herstellen eines einzigen Produkts erzeugt werden, und/oder um welche, die beim Herstellen von unterschiedlichen Produkten erzeugt werden.

Es können zum Beispiel alle Produktionsdaten, die einen ersten Herstellungsschritt beschreiben, in eine erste Produktionsdatenkategorien fallen, und alle Produktionsdaten, die einen zweiten Herstellungsschritt beschreiben, in eine zweite Produktionsdatenkategorien fallen. Es ist auch möglich, die Produktionsdatenkategorien von Produktionsdaten z.B. in Abhängigkeit von einer Uhrzeit, zu der die Produktionsdaten erzeugt wurden, zu bestimmen.

Insbesondere liegt nicht für eine jede der erzeugten Produktionsdaten eine eigene Schutzinformation vor. Stattdessen kann die Schutzinformation auch gruppiert einen Schutz für alle Produktionsdaten einer Produktionsdatenkategorie definieren. Dadurch kann z.B. der Umfang der Schutzinformation deutlich reduziert werden.

Gemäß einer weiteren Ausführungsform bestimmt das Schutzverfahren, ob die zu schützenden Produktionsdaten eingeschränkt bereitzustellen sind, nicht bereitzustellen sind und/oder kryptographisch verschlüsselt bereitzustellen sind.

Produktionsdaten, die nicht bereitzustellen sind, werden insbesondere derart durch die Herstellungseinrichtung geschützt, dass sie nicht an externe Einrichtungen außerhalb der Herstellungseinrichtung ausgegeben werden. Das heißt zum Beispiel, dass diese Produktionsdaten durch die Herstellungseinrichtung geheim gehalten werden.

Die Produktionsdaten, für die das Schutzverfahren ein eingeschränktes Bereitstellen vorschreibt, werden nur teilweise an externen Einrichtungen bereitgestellt. Welcher Teil dieser Produktionsdaten an die externen Einrichtungen bereitgestellt wird, kann durch das Schutzverfahren vorgegeben werden.

Die Produktionsdaten, die kryptographisch verschlüsselt bereitzustellen sind, werden insbesondere erst an externe Einrichtungen übertragen, wenn sie durch einen kryptographischen Schlüssel verschlüsselt sind. Der kryptographische Schlüssel kann durch die Schutzinformation bereitgestellt werden.

Gemäß einer weiteren Ausführungsform umfasst das Verfahren ferner
Bereitstellen der geschützten Produktionsdaten an einen Benutzer, an eine Speichereinrichtung, an eine externe Einrichtung, an eine Blockchain, einen Cloud-Dienst, eine Internet-of-Things-Plattform und/oder an ein Netzwerk.

Die Produktionsdaten werden insbesondere geschützt bereitgestellt. Der Benutzer ist beispielweise ein Benutzer der Werkzeugmaschine, z.B. ein Maschinenbauer. Der Benutzer kann manuell auf die Produktionsdaten zugreifen. Die Produktionsdaten können dem Benutzer auch automatisch bereitgestellt werden, z.B. über einen lokalen oder Cloud-Dienst.

Die Speichereinrichtung ist zum Beispiel ein RAM-Speicher, ein Cloud-Dienst, eine SD-Karte, ein USB-Speicher oder eine Festplatte. Unter der externen Einrichtung fallen alle Einrichtungen, die nicht Teil der Werkzeugmaschine sind, zum Beispiel Analyseeinrichtungen zum Analysieren der Produktionsdaten.

Die geschützten Produktionsdaten können auch als ein oder mehrere zusätzliche Blöcke in eine Blockchain geschrieben werden. Die Blockchain ist zum Beispiel eine Bitcoin-, Ethereum-, Chain-, IOTA- oder Hyperledger-Blockchain. Die Produktionsdaten können codiert als eine Transaktionsdatenstruktur der Blockchain zur Aufnahme in einem Block der Blockchain bereitgestellt werden.

Das Netzwerk kann sowohl ein öffentliches als auch ein privates Netzwerk sein.

Das Bereitstellen der Produktionsdaten kann kabellos oder über ein Kabel erfolgen. Das Bereitstellen kann beispielsweise über eine Netzwerkverbindung wie eine Ethernetverbindung oder eine WLAN-Verbindung erfolgen. Als Protokolle für die Übertragung der Produktionsdaten können zum Beispiel FTP (File Transfer Protocol), SFTP (Secure File Transfer Protocol), SCP (Secure Copy Protocol), HTTP (Hypertext Transfer Protocol), HTTPS (Hypertext Transfer Protocol Secure), OPC UA (OPC Unified Architecture), SMTP (Simple Mail Transfer Protocol), XMPP (Extensible Messaging and Presence Protocol) oder MQTT (Message Queuing Telemetry Transport) Protokolle verwendet werden.

Gemäß einer weiteren Ausführungsform wird die Schutzinformation in einer Speichereinheit der Werkzeugmaschine gespeichert.

Insbesondere ist die Schutzinformation fest vorgegeben, also fest in der Speichereinheit gespeichert. Die Schutzinformation kann durch den Betreiber der Werkzeugmaschine oder durch den Benutzer in der Speichereinheit gespeichert werden.

Gemäß einer weiteren Ausführungsform ist die Schutzinformation zumindest teilweise in der Steuerinformation enthalten und wird der Werkzeugmaschine zusammen mit der Steuerinformation bereitgestellt.

Die Schutzinformation kann insbesondere Teil der Steuerinformation sein. Der kryptographische Schlüssel zum Schützen der Produktionsdaten kann in der Steuerinformation enthalten sein. Es kann sich dabei um denselben (privaten oder geheimen) Schlüssel handeln, wie der zum Schützen der Steuerinformation verwendete Schlüssel.

Gemäß einer weiteren Ausführungsform enthält die Steuerinformation eine Referenz für zumindest einen Teil der Schutzinformation und der zumindest eine Teil der Schutzinformation wird der Werkzeugmaschine über diese Referenz bereitgestellt.

Die Referenz kann ein URI (Uniform Resource Identifier) oder ein URL (Uniform Resource Locator) sein. Durch die Referenz, die in der Schutzinformation enthalten ist, kann die Werkzeugmaschine insbesondere die Steuerinformation oder ein Teil davon erhalten. Das Referenzieren ermöglicht insbesondere eine dynamische Anpassung der Schutzinformation.

Ferner ist das Referenzieren insbesondere bei einem Verwenden eines öffentlichen Schlüssels zum Verschlüsseln der Daten von Vorteil, weil der entsprechende öffentliche Schlüssel nachgeladen werden kann, und der Werkzeugmaschine nicht zusammen mit der Schutzinformation bereitgestellt werden muss. Dadurch kann der Schutz der Produktionsdaten verbessert werden.

Gemäß einer weiteren Ausführungsform wird die Schutzinformation dynamisch verändert. Wie bereits zuvor angedeutet, erfolgt die dynamische Veränderung der Schutzinformation insbesondere in Verbindung mit einem Referenzieren der Schutzinformation. Die dynamische Veränderung der Schutzinformation kann insbesondere eine Anpassung der Schutzinformation an relevante Parameter sein. Die Schutzinformation kann zum Beispiel in Abhängigkeit eines Benutzers der Werkzeugmaschine verändert werden.

Gemäß einer weiteren Ausführungsform ist die Steuerinformation mit einem öffentlichen kryptographischen Schlüssel verschlüsselt, der durch die Werkzeugmaschine zum Verschlüsseln von Produktionsdaten verwendet wird.

Die Produktionsdaten werden insbesondere mit demselben Schlüssel wie die Steuerinformation verschlüsselt. Eine berechtigte, vertrauenswürdige Einrichtung braucht insbesondere nur einen einzigen Schlüssel (z.B. ein geheimer Schlüssel) bzw. ein einziges Schlüsselpaar (das z.B. einen privaten kryptographischen Schlüssel umfasst), um sowohl den Inhalt der Produktionsdaten als auch den Inhalt der Steuerinformation zu lesen.

Gemäß einer weiteren Ausführungsform sind Entschlüsselungsdaten, die ein Entschlüsseln von geschützten Produktionsdaten ermöglichen, in dem hergestellten Produkt eingebettet.

Die Entschlüsselungsdaten können ein unmittelbares Entschlüsseln der Produktionsdaten ermöglichen. Alternativ können die Entschlüsselungsdaten auch das Ableiten eines Schlüssels ermöglichen, welcher letztendlich das Entschlüsseln der Produktionsdaten ermöglicht.

Insbesondere sind die Entschlüsselungsdaten produktgebunden. Zum Entschlüsseln der Produktionsdaten wird eine externe Einrichtung insbesondere nicht selbst die Entschlüsselungsdaten enthalten, sondern kann diese von dem Produkt ablesen. Die Produktionsdaten können von Produkt zu Produkt unterschiedlich sein, sodass die Produktionsdaten produktspezifisch sind. Dadurch kann zum Beispiel nur ein Benutzer, der das Produkt gekauft hat, die Produktionsdaten erhalten. Es kann beispielsweise verhindert werden, dass die Produktionsdaten erhalten werden können, ohne das Produkt zu besitzen.

Gemäß einer weiteren Ausführungsform werden die Entschlüsselungsdaten in dem hergestellten Produkt gespeichert.

Die Entschlüsselungsdaten können zum Beispiel in einem dafür vorgesehenen Speicherbaustein oder Crypto-Kontroller des Produkts gespeichert sein. Das Speichern der Entschlüsselungsdaten kann während der Herstellung des Produkts erfolgen.

Gemäß einer weiteren Ausführungsform werden die Entschlüsselungsdaten durch oder abhängig von einer codierten mechanischen Struktur des hergestellten Produkts, insbesondere einen gedruckten und/oder gefrästen Barcode, bestimmt.

Die codierte mechanische Struktur des Produkts wird insbesondere während der Herstellung des Produkts erhalten. Es kann sich dabei um eine Oberflächeneigenschaft des Produkts, um einen 3D-gedruckten Barcode und/oder um einen gefrästen Barcode handeln. Als Barcode sind auch 1D-Barcodes und/oder 2D-Barcodes denkbar.

Weiterhin wird ein Computerprogrammprodukt vorgeschlagen, welches auf einer programmgesteuerten Einrichtung die Durchführung des wie Verfahrens gemäß dem ersten Aspekt oder gemäß einer Ausführungsform des ersten Aspekts veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Gemäß einem zweiten Aspekt wird eine Werkzeugmaschine zur Herstellung eines Produkts vorgeschlagen. Die Werkzeugmaschine umfasst:
eine Herstelleinheit zum Herstellen des Produkts unter Berücksichtigung einer Steuerinformation, die das Herstellen des Produkts steuert;
eine Erzeugungseinheit zum Erzeugen von Produktionsdaten während des Herstellens des Produkts, wobei die Produktionsdaten das Herstellen des Produkts beschreiben;
eine Bereitstelleinheit zum Bereitstellen einer Schutzinformation, die angibt, welche der Produktionsdaten zu schützen sind, und die ein Schutzverfahren für diese zu schützenden Produktionsdaten definiert; und
eine Schutzeinheit zum Schützen derjenigen Produktionsdaten, die gemäß der Schutzinformation zu schützen sind, mit dem durch die Schutzinformation definierten Schutzverfahren.

Die jeweilige Einheit, zum Beispiel die Herstelleinheit, Erzeugungseinheit, Bereitstelleinheit oder Schutzeinheit, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor oder als Steuerrechner eines Fahrzeuges ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Gemäß einer Ausführungsform ist die Werkzeugmaschine zum Durchführen des Verfahrens gemäß dem ersten Aspekt oder gemäß einer Ausführungsform des ersten Aspekts geeignet.

Gemäß einer weiteren Ausführungsform ist die Werkzeugmaschine ein 3D-Drucker.

Die für das vorgeschlagene Verfahren beschriebenen Ausführungsformen und Merkmale gelten für die vorgeschlagene Werkzeugmaschine entsprechend.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
Fig. 1 zeigt eine Werkzeugmaschine gemäß einer ersten Ausführungsform;
Fig. 2 zeigt ein Verfahren zur Herstellung eines Produkts gemäß einer ersten Ausführungsform;
Fig. 3 zeigt ein Beispiel eines Herstellungssystems mit einer Werkzeugmaschine gemäß einer zweiten Ausführungsform; und
Fig. 4 zeigt ein Verfahren zur Herstellung eines Produkts gemäß einer zweiten Ausführungsform.

In den Figuren sind gleiche oder funktionsgleiche Elemente mit denselben Bezugszeichen versehen worden, sofern nichts anderes angegeben ist.

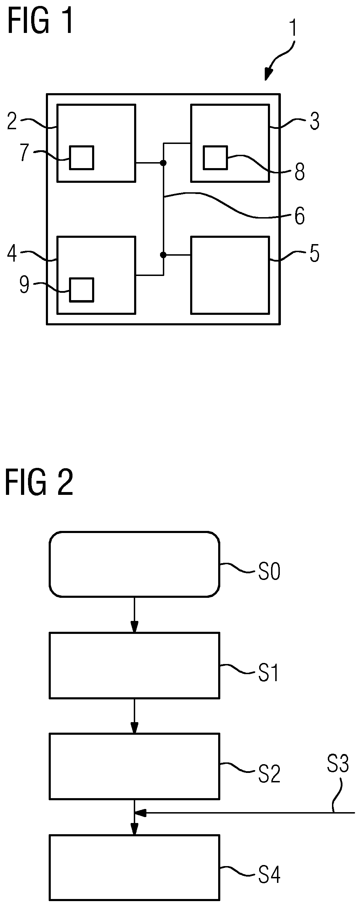

Die Fig. 1 zeigt eine Werkzeugmaschine 1 gemäß einer Ausführungsform. Die Werkzeugmaschine 1 ist ein 3D-Drucker zum Drucken/Herstellen von Produkten. Mit dem 3D-Drucker 1 kann zum Beispiel eine Kunststoffbrille (nicht dargestellt) als Produkt hergestellt werden.

Die Werkzeugmaschine 1 umfasst eine Herstelleinheit 2, eine Erzeugungseinheit 3, eine Bereitstelleinheit 4 und eine Schutzeinheit 5, welche über ein internes Kabel 6 miteinander verbunden sind.

Die Werkzeugmaschine 1 ist geeignet, das Produkt gemäß einem Verfahren zur Herstellung eines Produkts herzustellen. Solch ein Verfahren ist zum Beispiel in der Fig. 2 dargestellt, welche ein Verfahren zur Herstellung eines Produkts gemäß einer ersten Ausführungsform zeigt.

Im Folgenden wird das Verfahren in Bezug auf die Fig. 1 und 2 gemeinsam beschrieben. In einem Schritt S0 wird die Werkzeugmaschine 1 bereitgestellt.

In einem Schritt S1 wird das Produkt mit der Werkzeugmaschine 1 hergestellt. Die Herstellung des Produkts erfolgt mit Hilfe der Herstelleinheit 2 und unter Berücksichtigung einer Steuerinformation 7, die in der Herstelleinheit 2 gespeichert ist. Die Steuerinformation 7 ist fest in der Herstelleinheit 2 gespeichert. Sie gibt vor, welche Schritte die Herstelleinheit 2 beim Herstellen des Produkts durzuführen hat, in welcher Reihenfolge und/oder mit welchen Einstellungen der Werkzeugmaschine 1.

Die Steuerinformation 7 kann zum Beispiel vorgeben, dass in einem ersten Schritt ein linker, grüner Brillenbügel gemäß einem ersten 3D-Druckprogramm 3D-gedruckt wird, dass anschließend ein blaues Brillengläsertragelement gemäß einem zweiten 3D-Druckprogramm 3D-gedruckt wird, und dass schließlich ein rechter, gelber Brillenbügel gemäß einem dritten 3D-Druckprogramm 3D-gedruckt wird. Die Herstelleinheit 2 stellt das Produkt (die Brille) gemäß der Steuerinformation 7 her. Die Steuerinformation 7 ist durch DRM kopiergeschützt.

Während der Herstellung des Produkts werden in einem Schritt S2 Produktionsdaten 8 durch die Erzeugungseinheit 3 erzeugt. Der Schritt S2 kann parallel zu dem Schritt S1 durchgeführt werden.

Die Produktionsdaten 8 sind Logdaten, die die Herstellung des Produkts beschreiben. Es handelt sich dabei beispielsweise um Temperaturdaten, die während der Herstellung des Produkts durch die Erzeugungseinheit 3 erfasst werden und eine Temperatur der Werkzeugmaschine angeben, und um Messdaten, die während der Herstellung des Produkts durch die Erzeugungseinheit 3 erfasst werden und Dimensionen des gefertigten Produkts angeben. Die Produktionsdaten 8 können anschließend analysiert werden, um eine ordnungsgemäße Herstellung des Produkts zu kontrollieren.

In einem Schritt S3 wird der Werkzeugmaschine 1 eine Schutzinformation 9 bereitgestellt. Die Schutzinformation 9 ist in der Bereitstelleinheit 4 der Werkzeugmaschine 1 gespeichert. Die Schutzinformation 9 wird bereits bei einer Initialisierung der Werkzeugmaschine 1 bestimmt und in der Bereitstelleinheit 4 gespeichert. Dabei ist die Schutzinformation 9 unveränderbar.

Die Schutzinformation 9 gibt für alle in dem Schritt S2 erzeugten Produktionsdaten 8 an, ob diese zu schützen sind, und ggf. wie sie zu schützen sind. Wie die zu schützenden Produktionsdaten 8 zu schützen sind, wird gemäß einem durch die Schutzinformation vorgegebenen Schutzverfahren bestimmt.

Die Schutzinformation 9 definiert für unterschiedliche Produktionsdatenkategorien unterschiedliche Schutzverfahren. Das Schutzverfahren definiert, dass die Produktionsdaten 8, die die Temperatur der Werkzeugmaschine 1 beschreiben (erste Produktionsdatenkategorie), kryptographisch verschlüsselt bereitzustellen sind. Ein öffentlicher kryptographischer Schlüssel zur kryptographischen Verschlüsselung dieser Produktionsdaten 8 wird durch die Schutzinformation 9 bereitgestellt. Das Schutzverfahren definiert ferner, dass die Produktionsdaten 8, die die Dimensionen des Produkts beschreiben (zweite Produktionsdatenkategorie), nicht an externe Einrichtungen bereitzugestellt werden dürfen.

In dem Schritt S3 werden die Produktionsdaten 8 unter Berücksichtigung der Schutzinformation 9 mit dem Schutzverfahren geschützt. Die Produktionsdaten 8 der ersten Produktionskategorie werden dabei mit dem öffentlichen kryptographischen Schlüssel verschlüsselt. Zudem werden die Produktionsdaten 8 der zweiten Produktionskategorie in einem nicht dargestellten geschützten Speicher der Werkzeugmaschine 1 sicher gespeichert und nur für interne Zwecke verwendet.

Die geschützten Produktionsdaten 8 der ersten Produktionskategorie können nur durch eine Einrichtung, die den dem öffentlichen kryptographischen Schlüssel zugeordneten privaten kryptographischen Schlüssel kennt, entschlüsselt werden. Die geschützten Produktionsdaten 8 der zweiten Produktionskategorie werden nicht nach außerhalb der Werkzeugeinrichtung 1 bereitgestellt. Somit wird der Inhalt der Produktionsdaten 8 geschützt. Auch die Steuerinformation 7 kann nicht durch unbefugte Benutzer aus den Produktionsdaten 8 abgeleitet werden, weil ein unbefugter Benutzer die Produktionsdaten 8 gar nicht lesen könnte.

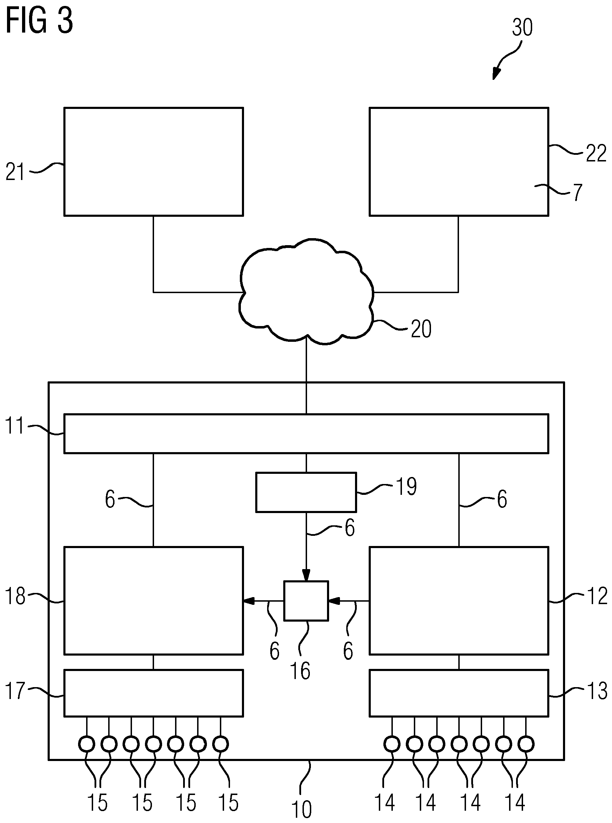

Die Fig. 3 zeigt ein Beispiel eines Herstellungssystems 30. Das Herstellungssystem 30 umfasst eine Werkzeugmaschine 10 gemäß einer zweiten Ausführungsform, eine Analyseeinrichtung 21 und einen Marktplatz 22, welche über ein Netzwerk 20 miteinander verbunden sind. Bei dem Netzwerk 20 handelt es sich beispielsweise um das Internet oder ein Mobilfunknetzwerk.

Die Werkzeugmaschine 10 gemäß der zweiten Ausführungsform unterscheidet sich von der Werkzeugmaschine 1 gemäß der ersten Ausführungsform unter anderem dadurch, dass die Steuerinformation 7 sowie die Schutzinformation 9 nicht fest in der Werkzeugmaschine 10 vorgegeben sind, sondern diese erst von dem Marktplatz 22 übermittelt werden.

Zudem ist der innere Aufbau der Werkzeugmaschine 10 gemäß der zweiten Ausführungsform unterschiedlich von dem der Werkzeugmaschine 1 gemäß der ersten Ausführungsform. Die Werkzeugmaschine 10 umfasst eine Kommunikationsschnittstelle 11, eine Steuerinformationsspeichereinheit 12, eine Herstellungssteuereinheit 13, mehrere Aktuatoren 14, mehrere Sensoren 15, einen Schutzinformationsspeicher 16, eine Herstellungserfassungseinheit 17, eine Schutzeinheit 18 und eine Konfigurationsschnittstelle 20.

Die Steuerinformationsspeichereinheit 12, die Herstellungssteuereinheit 13 und die Aktuatoren 14 bilden gemeinsam eine Herstelleinheit. Die Sensoren 15 und die Herstellungserfassungseinheit 17 bilden gemeinsam eine Erzeugungseinheit. Der Schutzinformationsspeicher 16 sowie die Konfigurationsschnittstelle 20 bilden gemeinsam eine Bereitstelleinheit.

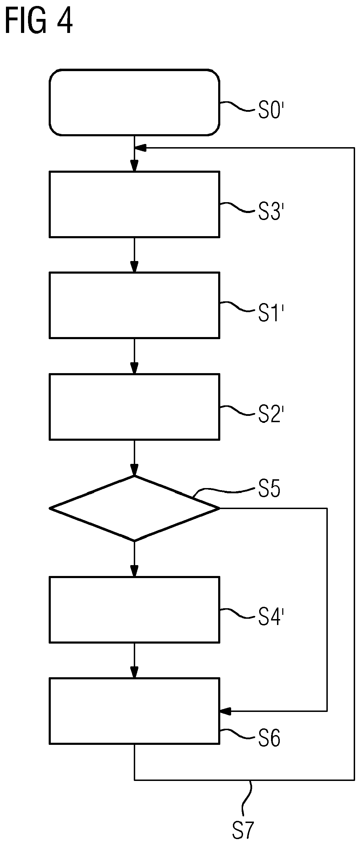

Die Werkzeugmaschine 10 ist geeignet, ein Verfahren zur Herstellung eines Produkts durchzuführen. Solch ein Verfahren ist beispielsweise in der Fig. 4 gezeigt, welches ein Verfahren zur Herstellung eines Produkts gemäß einer zweiten Ausführungsform darstellt. Im Folgenden werden die Fig. 3 und 4 gemeinsam beschrieben.

Die Schritte S0', S1', S2' und S3' aus dem Verfahren gemäß der zweiten Ausführungsform entsprechen im Wesentlichen den Schritten S0, S1, S2 und S3 aus dem Verfahren gemäß der ersten Ausführungsform. Im Folgenden werden vor allem die Unterschiede zwischen den Ausführungsformen beschrieben.

In einem Vorbereitungsschritt S0' werden die Werkzeugmaschine 10, die Analyseeinrichtung 21 und der Marktplatz 22 bereitgestellt. Die Analyseeinrichtung 21 kann als eine zu der Werkzeugmaschine 10 externe Einrichtung betrachtet werden.

In einem Schritt S3' empfängt die Werkzeugmaschine 10 die Steuerinformation 7 und die Schutzinformation 9 von dem Marktplatz 22. Der Marktplatz 22 ist insbesondere eine zentrale Einrichtung, in der Steuerinformationen 7 und Schutzinformationen für unterschiedliche Werkzeugmaschinen 10 bestimmt werden und an diese Werkzeugmaschinen 10 geschickt werden.

Die Steuerinformation 7 und die Schutzinformation 9 werden der Werkzeugmaschine 10 über ihre Kommunikationsschnittstelle 11 bereitgestellt. Die Steuerinformation 7 wird in der Steuerinformationsspeichereinheit 12 gespeichert. Die Schutzinformation 9, welche einen öffentlichen kryptographischen Schlüssel zum Verschlüsseln von Produktionsdaten 8 umfasst, wird in dem Schutzinformationsspeicher 16 gespeichert.

In einem Schritt S1' wird das Produkt mit der Werkzeugmaschine 10 hergestellt. Hierzu werden die Aktuatoren 14 durch die Herstellungseinheit 13 mit Hilfe der Steuerinformation 7 aus der Steuerinformationsspeichereinheit 12 angesteuert.

In einem Schritt S2' werden während der Herstellung des Produkts Produktionsdaten 8 durch die Werkzeugmaschine 10 erzeugt. Hierzu erfassen die Sensoren 15 die Herstellungstemperatur und Dimensionen des hergestellten Produktes. Die Herstellungserfassungseinheit 17 steuert dabei die Sensoren 15 an und leitet die erfassten Produktionsdaten 8 an die Schutzeinheit 18 weiter.

In einem Schritt S5 wird ermittelt, ob die Produktionsdaten 8 zu schützen sind. Der Schritt S5 wird anhand der Schutzeinheit 18 durchgeführt. Das Ermitteln, ob die Produktionsdaten 8 zu schützen sind, erfolgt unter Berücksichtigung der in dem Schutzinformationsspeicher 16 gespeicherten Schutzinformation 9.

Falls in dem Schritt S5 ermittelt wird, dass die Produktionsdaten 8 zu schützen sind, werden die Produktionsdaten 8 in einem Schritt S4' geschützt. Zum Schützen der zu schützenden Produktionsdaten 8 verwendet die Schutzeinheit 18 den öffentlichen kryptographischen Schlüssel, der als Teil der Schutzinformation 9 in dem Schutzinformationsspeicher 16 abgelegt wurde.

Die geschützten Produktionsdaten 8 werden anschließend in einem Schritt S6 an die Analyseeinrichtung 21 übertragen. Hierzu schickt die Werkzeugmaschine 10 die geschützten Produktionsdaten 8 über die Kommunikationsschnittstelle 11 an die Analyseeinrichtung 21.

Die Analyseeinrichtung 21 ist eine vertrauenswürdige Einrichtung, der es erlaubt ist, den Inhalt der Produktionsdaten 8 zu lesen und zu analysieren. Solchen vertrauenswürdigen Einrichtungen wird der dem öffentlichen kryptographische Schlüssel zugeordnete private Schlüssel bereitgestellt. So weist die Analyseeinrichtung 21 den privaten kryptographischen Schlüssel zum Entschlüsseln der kryptographisch geschützten Produktionsdaten 8 auf. Mit diesem Schlüssel kann die Analyseeinrichtung 21 die geschützten Produktionsdaten 8 entschlüsseln und die Produktionsdaten 8 verwenden, um die ordnungsgemäße Herstellung des Produkts durch die Werkzeugmaschine 10 zu überprüfen. Statt eines asymmetrischen kryptographischen Verfahrens mit öffentlichem Verschlüsselungsschlüssel und zugeordnetem privaten Entschlüsselungsschlüssel kann in einer anderen Variante ein symmetrisches kryptographisches Verfahren verwendet werden, das den gleichen geheimen Schlüssel zum Verschlüsseln und zum Entschlüsseln verwendet. Hierbei kann der geheime Schlüssel, der zum Verschlüsseln der Produktionsdaten 8 verwendet wird, in der Steuerinformation 7 enthalten sein. Der geheime Schlüssel kann in dem Schutzinformationsspeicher 16 abgelegt werden.

Die Schutzeinheit 18 der Werkzeugmaschine 10 verwendet den im Schutzinformationsspeicher 16 abgelegten geheimen Schlüssel, um die Produktionsdaten 8 zu verschlüsseln. Eine Analyseeinrichtung 21 weist in diesem Fall den gleichen geheimen Schlüssel zum Entschlüsseln der kryptographisch geschützten Produktionsdaten 8 auf.

Einer nicht vertrauenswürdigen Einrichtung, also einer Einrichtung, der nicht explizit erlaubt ist, den Inhalt der Produktionsdaten 8 zu lesen und/oder zu analysieren, wird der dem öffentlichen kryptographischen Schlüssel zugeordnete private Schlüssel bzw. der geheime Schlüssel zum Entschlüsseln der kryptographisch geschützten Produktionsdaten 8 nicht bereitgestellt. Dadurch kann solche eine nicht vertrauenswürdige Einrichtung die Produktionsdaten 8 nicht entschlüsseln und auch nicht lesen. Dadurch wird verhindert, dass die nicht vertrauenswürdige Einrichtung die Steuerinformation 7 aus den Produktionsdaten 8 ableiten kann und das Produkt unberechtigt nachgebaut wird.

In einer Variante ist ein Schlüsselmarkt (nicht dargestellt) vorgesehen, von dem eine berechtigte Analyseeinrichtung 21 einen zum Schutz von Produktionsdaten 8 verwendeten privaten kryptographischen Schlüssel oder geheimen kryptographischen Schlüssel abfragen kann. Dazu authentisiert sich die Analyseeinrichtung 21 mit einem kryptographischen Authentisierungsschlüssel oder Authentisierungstoken gegenüber dem Schlüsselmarkt 23. Der Schlüsselmarkt 23 prüft, ob die authentisierte Analyseeinrichtung 21 berechtigt ist, einen angeforderten kryptographischen Schlüssel zum Entschlüsseln von kryptographisch geschützten Produktionsdaten 8 zu erhalten. Falls dies der Fall ist, so stellt der Schlüsselmarkt 23 der Analyseeinrichtung 21 den angeforderten kryptographischen Schlüssel zum Entschlüsseln von kryptographisch geschützten Produktionsdaten 8 bereit.

Falls in dem Schritt S5 ermittelt wird, dass die Produktionsdaten 8 nicht zu schützen sind, werden die Produktionsdaten 8 in dem Schritt S6 ungeschützt an die Analyseeinrichtung 21 geschickt.

In einem Schritt S7 erfolgt ein dynamisches Aktualisieren der Steuerinformation 7 und/oder der Schutzinformation 9. Dabei übermittelt der Marktplatz 22 der Werkzeugmaschine 10 aktualisierte Versionen der Steuerinformation 7 und/oder die Schutzinformation 9.

In einer Ausführungsform ist jederzeit nur ein Teil der Schutzinformation 9 aktiv. Der aktive Teil der Schutzinformation 9 kann anhand der Konfigurationsschnittstelle 19 durch einen Benutzer der Werkzeugmaschine 10 bestimmt werden.

In einer weiteren Ausführungsform kann in die Aktivierung der Schutzinformation 9 und/oder in das Schützen der Produktionsdaten 8 eine Information über einen aktuellen Herstellungsschritt einfließen.

Obwohl die vorliegende Erfindung anhand von Ausführungsbeispielen beschrieben wurde, ist sie vielfältig modifizierbar. Es können zum Beispiel zum Schützen von unterschiedlichen Produktionsdaten 8 unterschiedliche Schlüssel verwendet werden. Die Werkzeugmaschinen 1, 10 können zum Beispiel auch Fräsmaschinen oder dergleichen sein. Der Marktplatz 22 könnte die Schutzinformation 9 auch über eine Referenz an die Werkzeugmaschine 1 bereitgestellt werden. Die geschützten Produktionsdaten 8 können auch in das Produkt, zum Beispiel als ein Barcode, eingebettet werden. Die einzelnen Verfahrensschritte können auch parallel zueinander oder in einer anderen als die beschriebene Reihenfolge erfolgen.

## Patentansprüche

1. Verfahren zur Herstellung eines Produkts mit einer Werkzeugmaschine (1, 10), umfassend:
Herstellen (S1, S1') des Produkts mit der Werkzeugmaschine (1, 10) unter Berücksichtigung einer Steuerinformation (7), die das Herstellen des Produkts steuert;
Erzeugen (S2, S2') von Produktionsdaten (8) durch die Werkzeugmaschine (1, 10) während des Herstellens des Produkts, wobei die Produktionsdaten (8) das Herstellen des Produkts beschreiben;
Bereitstellen (S3, S3') einer Schutzinformation (9) an die Werkzeugmaschine (1, 10), die angibt, welche der Produktionsdaten (8) zu schützen sind, und die ein Schutzverfahren für diese zu schützenden Produktionsdaten (8) definiert; und
Schützen (S4, S4') derjenigen Produktionsdaten (8), die gemäß der Schutzinformation (9) zu schützen sind, mit dem durch die Schutzinformation (9) definierten Schutzverfahren.

2. Verfahren nach Anspruch 1,
**dadurch gekennzeichnet,**
**dass** die Schutzinformation (9) für unterschiedliche Produktionsdatenkategorien unterschiedliche Schutzverfahren definiert, wobei jede Produktionsdatenkategorie mehrere Produktionsdaten (8) umfasst, welche bei dem Herstellen eines einzigen Produkts erzeugt werden und/oder welche bei dem Herstellen von unterschiedlichen Produkten mit der Werkzeugmaschine (1, 10) erzeugt werden.

3. Verfahren nach Anspruch 1 oder 2,
**dadurch gekennzeichnet,**
**dass** das Schutzverfahren bestimmt, ob die zu schützenden Produktionsdaten (8) eingeschränkt bereitzustellen sind, nicht bereitzustellen sind und/oder kryptographisch verschlüsselt bereitzustellen sind.

4. Verfahren nach einem der Ansprüche 1 - 3,
**gekennzeichnet durch**:
Bereitstellen (S6) der geschützten Produktionsdaten (8) an einen Benutzer, an eine externe Einrichtung (21), an eine Speichereinrichtung, an eine Blockchain, an einen Cloud-Dienst, an eine Internet-of-Things-Plattform und/oder an ein Netzwerk.

5. Verfahren nach einem der Ansprüche 1 - 4,
**dadurch gekennzeichnet,**
**dass** die Schutzinformation (9) in einer Speichereinheit der Werkzeugmaschine (1, 10) gespeichert wird;
**dass** die Schutzinformation (9) zumindest teilweise in der Steuerinformation (7) enthalten ist und der Werkzeugmaschine (1, 10) zusammen mit der Steuerinformation (7) bereitgestellt wird; und/oder
**dass** die Steuerinformation (7) eine Referenz für zumindest einen Teil der Schutzinformation (9) enthält und der zumindest eine Teil der Schutzinformation (9) der Werkzeugmaschine (1, 10) über diese Referenz bereitgestellt wird.

6. Verfahren nach einem der Ansprüche 1 - 5,
**dadurch gekennzeichnet,**
**dass** die Schutzinformation (9) dynamisch verändert wird.

7. Verfahren nach einem der Ansprüche 1 - 6,
**dadurch gekennzeichnet,**
**dass** die Steuerinformation (7) mit einem öffentlichen kryptographischen Schlüssel verschlüsselt ist, der durch die Werkzeugmaschine (1, 10) zum Verschlüsseln von Produktionsdaten (8) verwendet wird.

8. Verfahren nach einem der Ansprüche 1 - 7,
**dadurch gekennzeichnet,**
**dass** Entschlüsselungsdaten, die ein Entschlüsseln von geschützten Produktionsdaten (8) ermöglichen, in dem hergestellten Produkt eingebettet sind.

9. Verfahren nach Anspruch 8,
**dadurch gekennzeichnet,**
**dass** die Entschlüsselungsdaten in dem hergestellten Produkt gespeichert werden und/oder durch oder abhängig von einer codierten mechanischen Struktur des hergestellten Produkts, insbesondere einen gedruckten und/oder gefrästen Barcode, bestimmt werden.

10. Computerprogrammprodukt, welches auf einer programmgesteuerten Einrichtung die Durchführung des Verfahrens nach einem der Ansprüche 1 bis 9 veranlasst.

11. Werkzeugmaschine (1, 10) zur Herstellung eines Produkts, umfassend:
eine Herstelleinheit (2) zum Herstellen des Produkts unter Berücksichtigung einer Steuerinformation (7), die das Herstellen des Produkts steuert;
eine Erzeugungseinheit (3) zum Erzeugen von Produktionsdaten (8) während des Herstellens des Produkts, wobei die Produktionsdaten (8) das Herstellen des Produkts beschreiben;
eine Bereitstelleinheit (4) zum Bereitstellen einer Schutzinformation (9), die angibt, welche der Produktionsdaten (8) zu schützen sind, und die ein Schutzverfahren für diese zu schützenden Produktionsdaten (8) definiert; und
eine Schutzeinheit (5) zum Schützen derjenigen Produktionsdaten (8), die gemäß der Schutzinformation (9) zu schützen sind, mit dem durch die Schutzinformation (9) definierten Schutzverfahren.

12. Werkzeugmaschine zum Durchführen des Verfahrens nach einem der Ansprüche 1 bis 9.

13. Werkzeugmaschine nach Anspruch 11 oder 12, welche ein 3D-Drucker ist.
